Europäisches Patentamt

European Patent Office

Office européen des brevets

(19)

(11) Publication number: **0 101 260**
**A2**

(12) # EUROPEAN PATENT APPLICATION

(21) Application number: **83304512.3**

(22) Date of filing: **04.08.83**

(51) Int. Cl.³: **F 16 B 2/04**

(30) Priority: **04.08.82 CA 408715**

(43) Date of publication of application:
**22.02.84 Bulletin 84/8**

(84) Designated Contracting States:
**DE GB SE**

(71) Applicant: **Pewsey, Brian Graham**
**555 St. Andrews Road**
**West Vancouver British Columbia V7S 1V3(CA)**

(71) Applicant: **Dennison, Robert Alexander**
**24 Weltevreden Avenue Rondabosch 7500**
**Cape Town Cape Province(ZA)**

(72) Inventor: **Pewsey, Brian Graham**
**555 St. Andrews Road**
**West Vancouver British Columbia V7S 1V3(CA)**

(72) Inventor: **Dennison, Robert Alexander**
**24 Weltevreden Avenue Rondabosch 7500**
**Cape Town Cape Province(ZA)**

(74) Representative: **Purvis, William Michael**
**Cameron et al,**
**D. Young & Co. 10 Staple Inn**
**London WC1V 7RD(GB)**

(54) Device for retaining material against a wall surface.

(57) A retaining device (10) to retain material (19) against the surface of a wall comprises a longitudinal body (14, 15, 16, 17, 23, 24) formed with a head portion (11) on one end to retain the material (19). Flexible fingers (12, 13) extend outwardly from the body (14, 15, 16, 17, 23, 24) at an angle and allow insertion of the device into a drilled hole (18) in the wall. The retaining device (10) is retained in the hole (18) in the wall by the fingers (12, 13) which prevent extraction.

FIGURE 2

EP 0 101 260 A2

Croydon Printing Company Ltd.

1

## "DEVICE FOR RETAINING MATERIAL AGAINST A WALL SURFACE"

The invention relates to a retaining device and, more particularly, to a retaining device used in mining and construction to retain material adjacent a wall surface.

When a tunnel is excavated for underground access, a concrete liner is often applied to the wall of the tunnel. The liner is used to prevent rock fall from the tunnel wall, to preserve the surface by preventing oxidization and to provide an interface to absorb accidental contact by mining tools and other apparatus. The liner also provides additional support strength to the excavation where ground conditions so warrant.

In order that the concrete liner may be applied to the tunnel wall, a wire mesh may be attached to the wall to provide a reinforcing base for the concrete. The method of attachment of the wire mesh to the tunnel wall is by means of bolts which are inserted in previously drilled cavities. The bolts, known as rock bolts, have a head portion outside the hole to retain the mesh material when installed.

Rock bolts presently used have disadvantages. They are first inserted in the cavity and then tightened to allow the inserted portion to expand in the cavity and be retained. After the mesh is positioned, a head portion is attached to the installed rock bolt, the head portion retaining the mesh. Rocks bolts presently used are expensive and over elaborate merely to retain the wire mesh for the short period it takes to apply the concrete. They are also time consuming to install.

According to one aspect of the invention, there is provided a retaining device for retaining material adjacent the opening of a cavity wherein the retaining device comprises a head, a longitudinal body portion and fingers extending outwardly from the longitudinal body portion at an acute angle thereto, the fingers being flexibly movable inwardly upon insertion of the device into a cavity and being capable of exerting a retaining force resisting removal of the device from the cavity after the device has been inserted to an operative position.

According to another aspect of the invention there is provided a method of forming a tunnel lining of concrete with wire reinforcement including the step of securing the wire reinforcement to the tunnel wall by a retaining device inserted to an operative position in a cavity in the tunnel wall wherein the retaining device is formed in one piece of flexible wire material and comprises an outer arcuate head portion which is engaged with the wire reinforcement, longitudinal body portions extending from the head portion, arcuate inner end portions connecting the longitudinal body portions to return shank portions and fingers extending outwardly from the return shank portions at an acute angle to the longitudinal body portions, the retaining device being so formed that the fingers are flexibly movable inwardly upon insertion of the device into the cavity and, in the operative position, are capable of exerting a retaining force on the walls of the cavity to resist removal of the device from the cavity thereby to secure the reinforcement to the tunnel wall.

The invention is diagrammatically illustrated by way of example in the accompanying drawings, in which:-

Figure 1 shows one embodiment of a retaining device according to the invention;

Figure 2 is a sectional view of a cavity with the retaining device of Figure 1 shown in its operative position in the cavity and showing retained wire mesh; and

Figure 3 shows a further embodiment of a retaining device according to the invention.

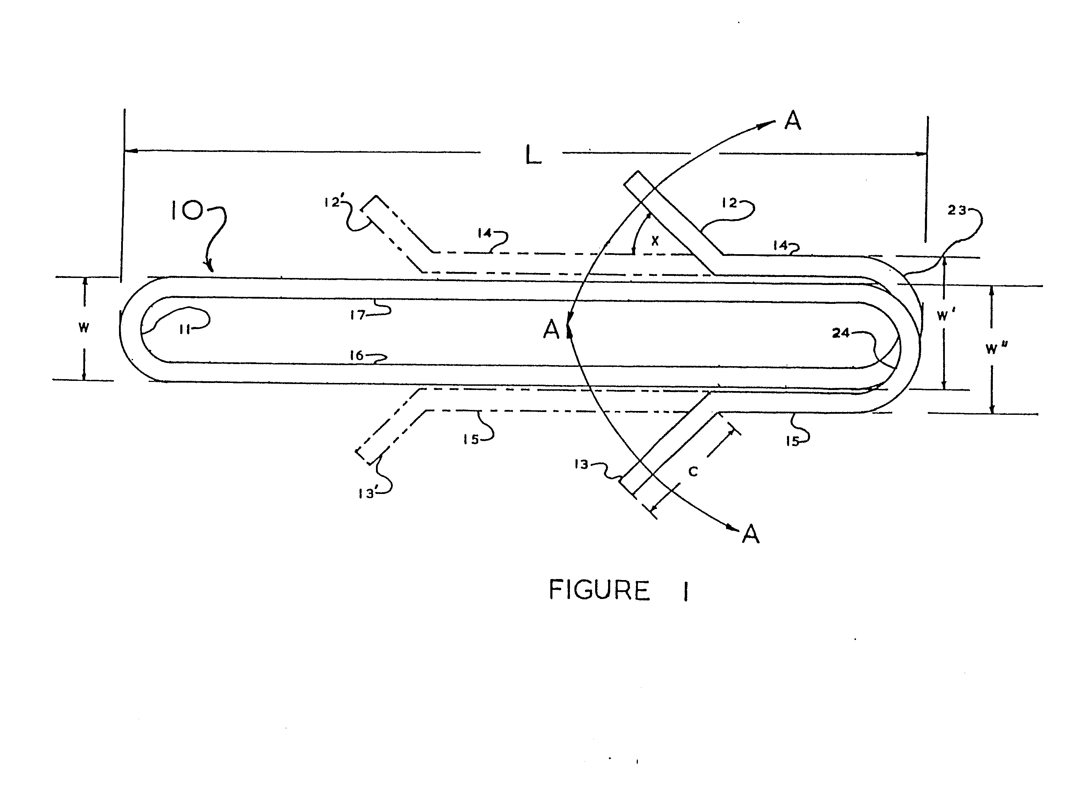

Referring to the drawings and firstly to Figure 1, a retaining device 10 comprises a single piece of flexible wire material formed in the shape depicted with an arcuate head 11, two outwardly extending fingers 12, 13, shank portions 14, 15 extending from the fingers 12, 13 respectively, two longitudinal body portions 16, 17 connected by the arcuate head 11 and arcuate end portions 23, 24 connecting the shank portions 14, 15 to the body portions 16, 17.

It has been found that 4.5 mm or 6.5 mm diameter high tensile steel is generally satisfactory for the wire material which is formed into the retaining device. The diameter of the wire must, however, be such that the device can flex so that the fingers 12, 13 are movable in the directions indicated by the arrows A.

The angle X formed between the fingers 12, 13 and the longitudinal body portion is, in the condition shown in Figure 1, an acute angle. While its value may be varied and still be satisfactory, an angle of approximately 45° has been found to be quite suitable.

The width W of the retaining device 10 may also be varied but it has been found that it should be about 3 mm to 6.5 mm less than the diameter of a hole or cavity into which it will be inserted. The length, denoted C, of the outwardly extending fingers 12, 13 may also be varied but it has been found that a length of approximately $1\frac{1}{2}$ W is usually suitable.

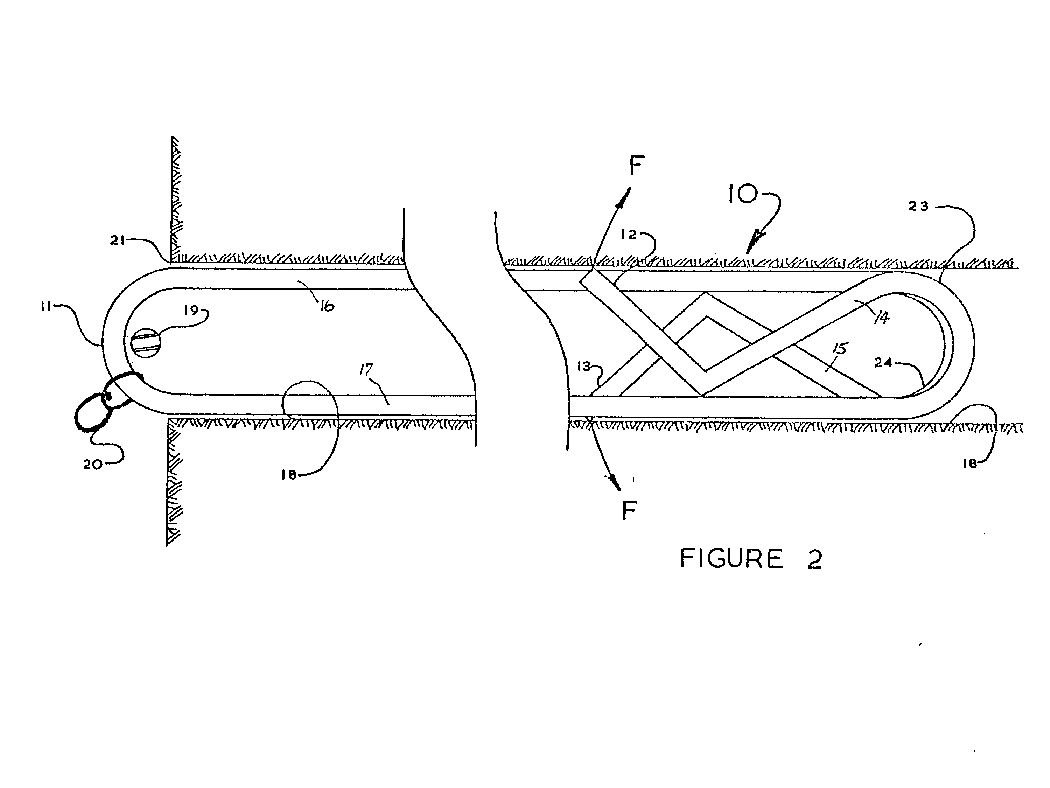

In operation and with reference to Figure 2, a cavity 18 will have been formed by drilling in a rock wall and will have a depth greater than the length L of the retaining device 10. For retaining wire reinforcing mesh for concrete, a cavity length of approximately 500 mm has been found satisfactory with the retaining device 10 having a length L of approximately 450 mm.

A retaining device 10 with widths W, W' and W", 6.5 mm to 3 mm smaller than the diameter of the cavity 18 in which it will be inserted is desirable.

The curved end portions 23, 24 are separated to allow a portion of wire mesh 19 to pass therebetween and the retaining device 10 is inserted into the mouth 21 of the cavity 18 and pressed inwardly until the desired depth is reached as shown in Figure 2. During installation, the device flexes so that the fingers 12, 13 trail over the inner face of the cavity 18 and allow insertion into cavity 18. After installation when the retaining device has reached its operative position and except when a wire 22 is attached between the flexible fingers 12, 13 as discussed hereafter, it is difficult to remove the retaining device 10 from the cavity 18 because of the radially outwardly and longitudinally inwardly directed components of the retaining force as shown by arrows F. Except as noted hereafter, therefore, it is contemplated that the installation is permanent.

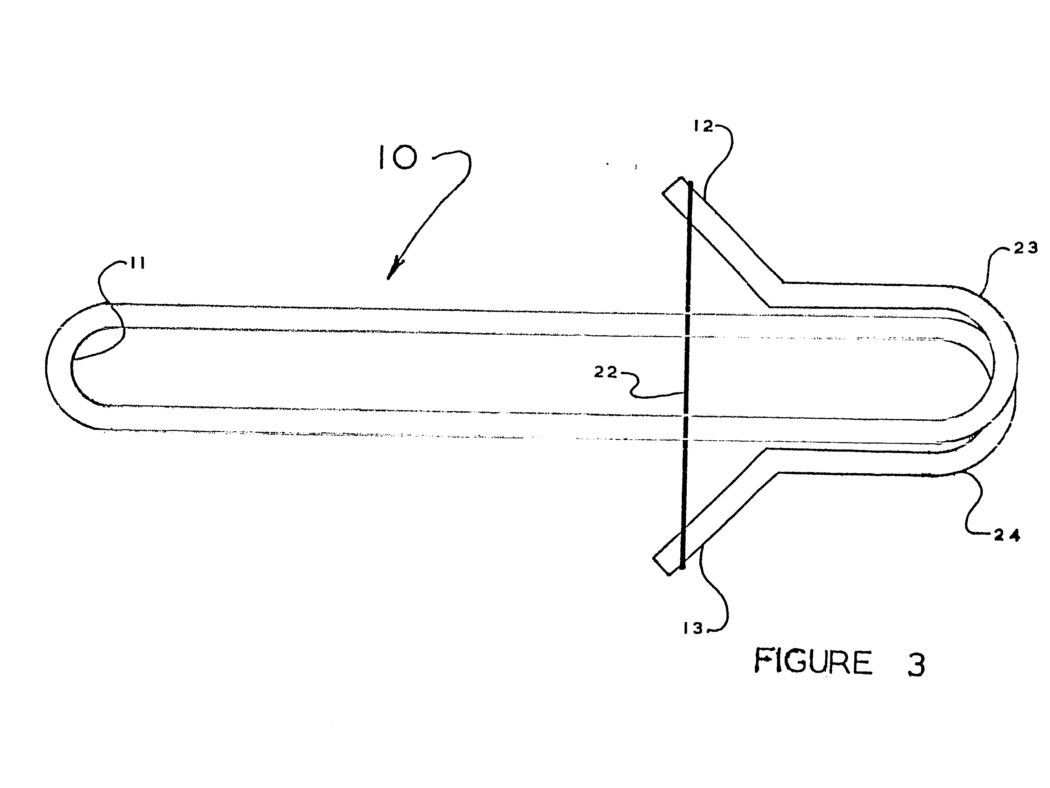

If removal of the retaining device 10 is required, the embodiment depicted in Figure 3 should be selected. In this embodiment, a wire 22 joins the fingers 12, 13. After installation, if removal is desired, the wire 22 can be engaged and pulled by a longitudinal hooked tool (not shown). This will cause the fingers 12, 13 to move inwardly away from the walls of cavity 18 and, therefore, permit the retaining device 10 to be withdrawn from the cavity 18.

A further embodiment of the invention is depicted in dotted lines in Figure 1. In this embodiment, the flexible fingers 12', 13' are located closer to the rounded head portion 11 than in the first embodiment. In this configuration, the fingers 12', 13' are far more flexible than in the first embodiment and, therefore, they offer less resistance to removal from the cavity since they will exert a lesser force on the cavity walls. This configuration may be selected if less retaining force is needed by the retaining device 10 after installation in the cavity 18 or when easier removal is desired without installation of the wire 22.

While the dimensions and specifications given herein have been found suitable under presently contemplated uses, the diameter of the formed wire of the device 10, its tensile strength, the longitudinal length L and the widths W, W' and W" all may be increased or decreased depending on the conditions under which it is desired to use the retaining device. Similarly, the angle X may be changed.

For example, the dimensions of the longitudinal body portions 16, 17 together with the widths W, W' and W" may be selected to provide enhanced stability and retaining force. This is accomplished by choosing the dimensions such that the longitudinal body portions will also press outwardly on the cavity walls after installation thereby providing an increased grip when the retaining device 10 is inserted.

While it is contemplated that the retaining device 10 will be used for retaining mesh material 19 adjacent the entrance area of the cavity, it could also be used to retain other material such as a chain 20 shown in Figure 2. Likewise, material may be retained adjacent a through hole in a shallow wall. In this event, the angle made by the fingers 12, 13 would be approximately $80^{\circ}$. The fingers 12, 13 would pass right through the wall and act to hold the retaining device when pulled back so that they engaged against the far side of the wall.

CLAIMS

1.    A retaining device for retaining material adjacent the opening of a cavity characterised in that the retaining device comprises a head (11), a longitudinal body portion (16, 17) and fingers (12, 13) extending outwardly from the longitudinal body portion (16, 17) at an acute angle (X) thereto, the fingers (12, 13) being flexibly movable inwardly upon insertion of the device (10) into a cavity (18) and being capable of exerting a retaining force resisting removal of the device from the cavity after the device (10) has been inserted to an operative position.

2.    A retaining device according to claim 1, characterised by shanks (14, 15) connecting the longitudinal body portion (16, 17) and the fingers (12, 13) the shanks (14, 15) being joined to the longitudinal body portion (16, 17) by arcuate end portions (23, 24).    ·

3.    A retaining device according to claim 1 or claim 2, characterised in that the device (10) is made from a single piece of material.

4.    A retaining device according to any one of claims 1 to 3, characterised in that the device (10) is so used that the ends of the fingers (12, 13) in the operative position engage the walls of the cavity (18) and the retaining force that they apply is an outwardly directed retaining force on the walls of the cavity (18).

5.    A retaining device according to claim 5, characterised in that the acute angle (X) is approximately 45$^o$.

6.    A retaining device according to any one of claims 1 to 3, characterised in that the device (10) is so used that the ends of the fingers (12, 13) in the operative position are located rearwardly of the cavity, engage a rear face of a wall in which the cavity is provided and apply said retaining force thereto.

7.    A retaining device according to claim 6, characterised in that the acute angle is approximately 80°.

8.    A retaining device according to any one of claims 1 to 7, characterised in that the head (11) comprises an arcuate portion joining side members of the longitudinal body portion (16, 17).

9.    A retaining device according to any one of claims 1 to 7, characterised in that the device (10) is made from a single piece of formed flexible wire material.

10.    A retaining device according to any one of claims 1 to 9, characterised in that the fingers (12, 13) are connected by a flexible connector (22), which allows the fingers (12, 13) to be retracted from the operative position upon force being applied to the connector (22) thereby to permit removal of the device from the cavity (18).

11.    A retainig device according to claim 10, characterised in that the flexible connector (22) is formed of wire material.

12.    A tunnel lining formed of concrete with wire reinforcement provided in the concrete characterised in that the wire reinforcement is secured to the wall of the tunnel during casting of the concrete by a retaining device according to any one of claims 1 to 11.

13.    A method of forming a tunnel lining of concrete with wire reinforcement including the step of securing the wire reinforcement to the tunnel wall by a retaining device inserted to an operative position in a cavity in the tunnel wall characterised in that the retaining device (10) is formed in one piece of flexible wire material and comprises an outer arcuate head portion (11) which is engaged with the wire reinforcement (19), longitudinal body portions (16, 17) extending from the head portion (11), arcuate inner end portions (23, 24) connecting the longitudinal body portions (16, 17) to return shank portions (14, 15) and fingers (12, 13) extending outwardly from the return shank portions (14, 15) at an acute angle (X) to the longitudinal body portions (16, 17), the retaining device (10) being so that the fingers (12, 13) are flexibly movable inwardly upon insertion of the device (10) into the cavity (18) and, in the operative position, are capable of exerting a retaining force on the walls of the cavity (18) to resist removal of the device (10) from the cavity (18) thereby to secure the reinforcement (19) to the tunnel wall.

FIGURE 1

FIGURE 2

FIGURE 3